# EUROPÄISCHE PATENTSCHRIFT

(11) **EP 1 092 579 B1**
(45) Veröffentlichungstag und Bekanntmachung des Hinweises auf die Patenterteilung: **26.06.2002**
(21) Anmeldenummer: 99120352.2
(22) Anmeldetag: 12.10.1999
(51) Int. Cl.: B60J 7/14, B60J 7/12, B60J 7/20

(54) **Versenkbares Kraftfahrzeugverdeck sowie Kraftfahrzeug mit diesem Verdeck**
Retractable folding top for motor vehicle and vehicle provided with this folding top
Toit pliant escamotable pour véhicule automobile et véhicule avec ce toit pliant

(43) Veröffentlichungstag der Anmeldung: 18.04.2001
(73) Patentinhaber: Dura Convertible Systems GmbH, 50735 Köln (DE)
(72) Erfinder: Mac Farland, David Dipl.-Ing., 85716 Unterschleissheim (DE)
(74) Vertreter: Strobel, Wolfgang, Dipl.-Ing.

(56) Entgegenhaltungen:
- EP-A- 0 835 780
- DE-A- 3 416 286
- DE-A- 3 635 373
- DE-A- 4 316 485

## Beschreibung

Die vorliegende Erfindung betrifft ein versenkbares Kraftfahrzeugverdeck, insbesondere für wenigstens viersitzige Cabriolets, nach dem Oberbegriff des Anspruchs 1. Weiterhin betrifft die vorliegende Erfindung ein Kraftfahrzeug, das ein derartiges Verdeck aufweist.

Seit geraumer Zeit haben sich die Anforderungen an Fahrzeuge, deren Dach geöffnet und geschlossen werden kann, erheblich erhöht. Diese Fahrzeuge, herkömmlicherweise als Cabriolets bekannt, werden zunehmend als Ganzjahreswagen verwendet, wodurch sich erheblich erhöhte Anforderungen an die Dachkonstruktion einschließlich der Dichtungen ergeben haben.

Neben dem Dachaufbau mittels eines flexiblen Verdecks, welches mittels eines entsprechenden Gestänges ein- und ausgefaltet werden kann, wurden meistens zusätzlich sogenannte Hardtops ausgebildet, die als komplettes Dachteil auf das Fahrzeug gesetzt werden. Bei derartigen Hardtops besteht nicht die Möglichkeit, diese in dem Fahrzeug selbst zu versenken, sondern diese Hardtops müssen üblicherweise an separater Stelle aufbewahrt werden.

Von der Anmelderin wurde bereits ein versenkbares Hardtop entwickelt, welches aus zwei Dachabschnitten besteht, einem oberen, im wesentlichen starren Dachabschnitt, der einen oberen Dachbereich bildet und in Verbindung mit dem oberen Randbereich der Windschutzscheibe bringbar ist, einem hinteren, im wesentlichen starren Dachabschnitt, der sich an den oberen Dachabschnitt anschließt und sich hinter den Fahrgastraum des Fahrzeugs erstreckt, wobei in dem hinteren Dachabschnitt ein Heckfenster angeordnet ist. Beide Dachabschnitte sind zusammen in einem Aufnahmeraum im Fahrzeug hinein und aus diesem heraus schwenkbar angeordnet.

Dieses Verdeck erfüllt insbesondere die Anforderungen an einen hervorragenden Dachaufbau für übliche Cabriolets, welche in der Regel nur zwei Sitze und gegebenenfalls zwei Notsitze aufweisen.

Aus der gattungsbildenden Druckschrift EP-A-0 835 780 ist ein Kraftfahrzeug mit einem versenkbaren Dach bekannt, bei dem das Dach in ein vorderes, ein mittleres und ein rückwärtiges Teilstück mit Heckfenster unterteilt ist, die jeweils als starre Schale ausgebildet sind. Die Dachabschnitte sind über Gelenkverbinder miteinander verbunden und werden beim Öffnungsvorgang zunächst gemeinsam entgegen der Fahrtrichtung verschwenkt, woraufhin der vordere Abschnitt unter das mittlere Teilstück verlagert wird. Im Anschluß daran werden beide mit einer synchronen Absenkbewegung unter das rückwärtige Teilstück gelagert, so daß alle drei Teilstücke übereinander liegen und gemeinsam in der Ablage abgesenkt werden können.

Der vorliegenden Erfindung liegt die Aufgabe zugrunde, ein versenkbares Kraftfahrzeugverdeck zu schaffen, welches insbesondere für größere Fahrzeuge, insbesondere viersitzige Cabriolets, geeignet ist und über einen einfachen Mechanismus in eine äußerst platzsparende Einklappstellung gebracht werden kann.

Diese Aufgabe wird durch die Merkmale des Anspruchs 1 gelöst.

Dadurch, daß beim Verschwenken des Verdecks von der ausgeklappten Dachstellung in die versenkte Öffnungsstellung gleichzeitig der erste vordere Dachteilabschnitt über den zweiten mittleren und entlang von diesem Dachteilabschnitt zwischen diesen und den hinteren Dachabschnitt bewegbar ist, wird erreicht, daß das Verdeck entsprechend platzsparend zusammengelegt werden kann und die Möglichkeit geschaffen wird, das Verdeck, obwohl als Hardtop ausgebildet, über einen einfachen Mechanismus vollständig in den Aufnahmeraum des Kraftfahrzeugs aufzunehmen.

Vorteilhafterweise weist das erfindungsgemäße Kraftfahrzeugverdeck eine flexible Außenhaut oder -schicht, insbesondere aus textilem Gewebe auf, wobei diese Außenhaut sowohl mit dem hinteren Dachabschnitt als auch mit dem ersten vorderen Dachteilabschnitt flächig verbunden ist. Dadurch wird erreicht, daß eine erhebliche Verringerung der Oberflächenbehandlung der starren Dachabschnitte möglich wird, beispielsweise entfällt eine Außenlackierung. Zudem wird der Vorteil erreicht, daß aufgrund der Tatsache, daß die Außenhaut gegenüber dem Fahrzeuginneren sicher abdichtet, keine zusätzlichen aufwendigen Dichtungsmaßnahmen an den Trennfugen zwischen den Dachabschnitten bzw. Dachteilabschnitten notwendig sind. Gegenüber herkömmlichen Hardtops wird somit eine erhebliche Kosteneinsparung erzielt, da die Dachabschnitte bzw. Dachteilabschnitte aus Kunststoffmaterial gebildet sein können, was zudem zu einer entsprechend leichten Bauweise führt. Zudem ist durch die flächige Verbindung eine entsprechend saubere Verarbeitung gewährleistet.

Das positive äußere Erscheinungsbild des erfindungsgemäßen Kraftfahrzeugverdecks wird dadurch noch erhöht, daß in geschlossener Verdeckstellung eine Zugkraft von der Außenhaut auf die Dachabschnitte ausgeübt wird, und somit die Außenhaut gespannt wird und sich ohne Faltenwurf über das gesamte Dach erstreckt.

Weiterhin sind vorteilhafterweise zwei Gelenkverbindungsstangen je Fahrzeuglängsseite vorgesehen, die gelenkig und in einer Gleitschiene längsbeweglich gelagert sind und dem ersten vorderen Dachteilabschnitt ermöglichen, über den zweiten mittleren Dachteilabschnitt hochzuschwenken und sich über diesen und entlang von diesem zu bewegen.

Durch die von der Außenhaut aufgebrachte Zugkraft, welche insbesondere auf den ersten vorderen Dachteilabschnitt und dessen vorderen Rand wirkt, wird beim Lösen der Dachverriegelungseinrichtung von dem oberen Randbereich der Windschutzscheibe, in der die Gegenhalterung der Verschlußeinrichtung angebracht ist, der erste vordere Dachteilabschnitt bereits etwas angehoben, da er sich aufgrund der Gelenkverbindungsstange schwenkbeweglich nach oben bewegen kann.

Vorteilhafterweise ist zum weiteren Bewegen des Verdecks eine Kraft von vorne auf den ersten vorderen Dachteilabschnitt aufbringbar, wodurch sich dieser sowohl gemäß der Länge der Gelenkverbindungsstangen nach oben und anschließend über den zweiten mittleren Dachteilabschnitt und entlang von diesem bewegt.

Vorteilhafterweise ist die Kraft mittels eines Motors aufbringbar, der sich beispielsweise in der Mitte des Verdecks, also im wesentlichen auf dessen Symmetrieachse befinden kann.

Weiterhin sind vorteilhafterweise je Fahrzeuglängsseite zwei Verbindungsstangen zwischen dem zweiten mittleren Dachteilabschnitt und dem hinteren Dachabschnitt vorgesehen, wobei je Fahrzeuglängsseite eine Verbindungsstange in Schließstellung des Verdecks oberhalb der zweiten Verbindungsstange und zu dieser nach vorne versetzt angeordnet ist, und jede Verbindungsstange gelenkig mit einem ihrer Enden mit dem zweiten mittleren Dachteilabschnitt und an dem anderen Ende mit dem hinteren Dachteilabschnitt verbunden ist.

Dadurch wird erreicht, daß beim Verschwenken des Verdecks der mittlere zweite Dachteilabschnitt in den hinteren Dachteilabschnitt hineinverschwenkt wird und dies mittels einer äußerst einfachen Konstruktion erfolgt. Hierzu ist vorteilhafterweise eine weitere Verbindungsstange je Fahrzeuglängsseite vorgesehen, die einerseits gelenkig mit einem Lagerbock des Fahrzeugs und andererseits gelenkig mit der unteren Verbindungsstange verbunden ist.

Weiterhin ist vorteilhafterweise das Heckfenster starr ausgebildet, insbesondere als Glasscheibe, das Heckfenster bewegt sich während der hintere Dachabschnitt in seine Versenkstellung verschwenkt wird, in den hinteren Dachabschnitt hinein. Damit wird vorteilhafterweise erreicht, daß der Platzbedarf des eingeklappten Verdecks erheblich reduziert werden kann, da insgesamt das Heckfenster in Versenkstellung nach oben verschwenkt ist und sich darunter ein größerer verbleibender Raum einstellt, der weitere wichtige Fahrzeugkomponenten, wie beispielsweise den Kraftstofftank, aufweisen kann.

Die vorliegende Erfindung betrifft auch ein Kraftfahrzeug, insbesondere ein wenigstens 4-sitziges Cabriolet, das sich dadurch auszeichnet, daß es ein Verdeck nach wenigstens einem der Ansprüche 1 bis 9 aufweist.

Weitere Einzelheiten, Merkmale und Vorteile der vorliegenden Erfindung ergeben sich aus der nachfolgenden Beschreibung unter Bezugnahme auf die Zeichnungen. Darin zeigt:
- Fig. 1:: eine schematische Seitenansicht eines erfindungsgemäßen versenkbaren Kraftfahrzeugverdecks in geschlossener Dachstellung;
- Fig. 2:: eine teilgeöffnete Stellung des Kraftfahrzeugverdecks von Fig. 1;
- Fig. 3:: eine nahezu versenkte Stellung des Kraftfahrzeugverdecks von Fig. 1;
- Fig. 4:: eine vollkommen versenkte Stellung des Kraftfahrzeugverdecks von Fig. 1, und
- Fig. 5:: in vergrößertem Maßstab das Kraftfahrzeugverdeck in versenkter Stellung gemäß Fig. 4.

In den Zeichnungen sind gleiche Elemente mit gleichen Bezugsziffern versehen.

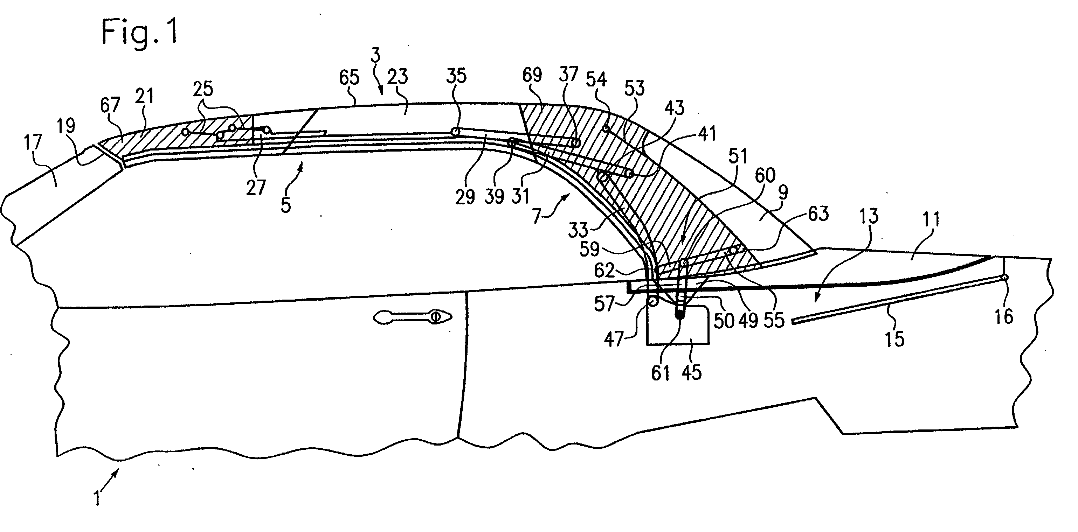

In Fig. 1 ist ein Kraftfahrzeug 1 in Form eines mindestens viersitzigen Cabriolets dargestellt, das eine entsprechend große Fahrgastzelle aufweist. Das Kraftfahrzeug 1 weist ein Kraftfahrzeugverdeck 3 auf, mit einem oberen, im wesentlichen starren Dachabschnitt 5 und einem hinteren, im wesentlichen starren Dachabschnitt 7. Der hintere Dachabschnitt 7 weist ein Heckfenster 9 in Form einer Heckscheibe auf. Der untere Randbereich des hinteren Dachabschnitts 7 und des Heckfensters 9 wird von einer an sich bekannten Abdeckung 11 umgeben, die schwenkbar gelagert ist, und einen Verdeck-Aufnahmeraum 13 abdeckt. Der Verdeck-Aufnahmeraum 13 weist eine Bodenplatte 15 auf, die um die Drehachse 16 schwenkbeweglich angeordnet ist. Im Beispielsfalle von Fig. 1 befindet sich die Bodenplatte 15 in ihrer oberen Stellung.

Am oberen Rand 19 einer Windschutzscheibe 17 ist eine Halteeinrichtung (nicht dargestellt) vorgesehen, die zur Aufnahme einer Verschlußeinrichtung (ebenfalls nicht dargestellt) des Kraftfahrzeugverdecks 3 dient.

Der obere Dachabschnitt 5 ist in einen ersten vorderen Dachteilabschnitt 21 und einen zweiten mittleren Dachteilabschnitt 23 unterteilt. Je Fahrzeuglängsseite sind zwei Gelenkverbindungsstangen 25 vorgesehen, die im Abstand voneinander gelenkig mit dem ersten vorderen Dachteilabschnitt 21 verbunden sind und an ihrem anderen Ende drehbar in einer Gleitschiene 27 geführt sind, die ihrerseits mit dem zweiten mittleren Dachabschnitt 23 verbunden ist. Die Funktionsweise der Gelenkverbindungsstangen 25 zusammen mit der Gleitschiene wird weiter unten näher beschrieben.

Wie aus Fig. 1 weiterhin ersichtlich sind je Fahrzeuglängsseite eine obere Verbindungsstange 29 und eine untere Verbindungsstange 31 vorgesehen sowie eine weitere Verbindungsstange 33. Die Verbindungsstangen 29, 31 und 33 dienen zum Verschwenken des zweiten mittleren Dachteilabschnitts gegenüber dem hinteren Dachabschnitt 7, wobei zwangsweise ein Mitverschwenken des ersten vorderen Dachteilabschnitts 21 ebenso erfolgt. Die obere Verbindungsstange 29 ist an einem vorderen Anlenkpunkt 35 gelenkig mit dem zweiten mittleren Dachabschnitt 23 und in einem hinteren Anlenkpunkt 37 gelenkig mit dem hinteren Dachabschnitt 7 verbunden. Die untere Verbindungsstange 31 ist in einem vorderen Anlenkpunkt 39 mit dem zweiten mittleren Dachteilabschnitt 23 und in einem hinteren Anlenkpunkt 41 mit dem hinteren Dachabschnitt 7 verbunden. Weiterhin ist die Verbindungsstange 33 in einer oberen Gelenkverbindung 43 gelenkig mit der unteren Verbindungsstange 31 verbunden, wobei sich die obere Gelenkverbindung 43 zwischen dem hinteren Anlenkpunkt 41 und dem vorderen Anlenkpunkt 39 befindet. An ihrem anderen Ende ist die Verbindungsstange 33 über eine untere Gelenkverbindung 47 mit einem Lagerbock bzw. einer Lagerplatte 45 verbunden, die ihrerseits mit dem Fahrzeug 1 verbunden ist.

Der hintere Dachabschnitt 7 ist über eine Lagerplatte bzw. einen Lagerflansch 49 drehbar um einen Drehpunkt 50 mit dem Kraftfahrzeug verbunden.

Weiterhin ist ein Gelenkmechanismus 51 für den unteren Bereich des Heckfensters 9 vorgesehen und ist eine Drehgelenkstange 53 für den oberen Bereich des Heckfensters 9 vorgesehen. Die Drehgelenkverbindungsstange 53 für den oberen Bereich des Heckfensters 9 ist an dem oberen Bereich des Heckfensters 9 angelenkt und an ihrem anderen Ende in einem Drehpunkt 54 gelenkig an dem hinteren Dachabschnitt 7 angelenkt.

Der Gelenkmechanismus 51 für den unteren Bereich des Heckfensters 9 weist eine erste Verbindungsstange 55, eine zweite Verbindungsstange 57 und eine dritte Verbindungsstange 59 auf. Die drei Verbindungsstangen 55, 57, 59 sind in einem gemeinsamen Gelenk 60 miteinander gelenkig verbunden und die zweite Verbindungsstange 57 ist bei 61 gelenkig mit dem Lagerbock 45 verbunden. Die dritte Verbindungsstange 59 ist in einem Anlenkpunkt 62 mit dem hinteren Dachabschnitt 7 verbunden und die erste Verbindungsstange 55 ist in einem Gelenk 63 mit dem unteren Bereich des Heckfensters 9 gelenkig verbunden.

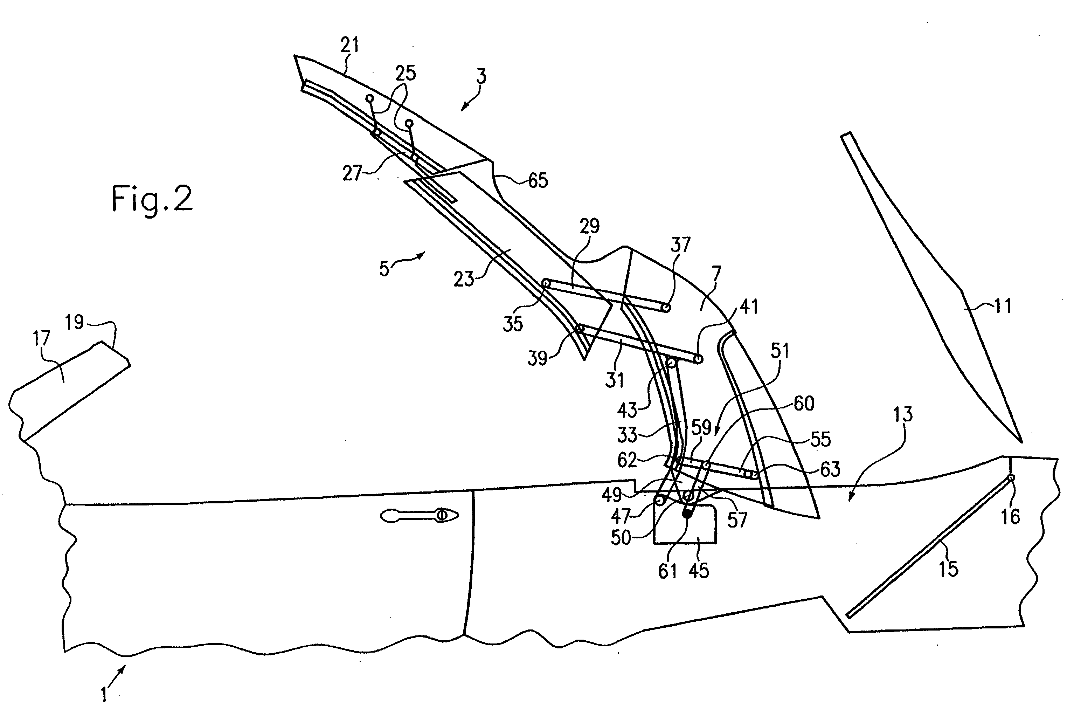

Die Betriebsweise des versenkbaren Kraftfahrzeugverdecks 3 wird nunmehr insbesondere unter Bezugnahme auf die Figuren 2 bis 5 beschrieben.

In Fig. 2 ist eine bereits deutlich geöffnete Stellung des erfindungsgemäßen Kraftfahrzeugverdecks 3 dargestellt. Zum Einschwenken bzw. Versenken des Kraftfahrzeugverdecks 3 in den Verdeckaufnahmeraum 13 wird die Abdeckung 11 nach oben verschwenkt und die Bodenplatte 15 nach unten.

Wie aus den Figuren 2 bis 5 gut ersichtlich, weist das Kraftfahrzeugverdeck 3 weiterhin eine Außenhaut 65 beispielsweise in Form eines textilen Gewebes auf, welche, wie aus Fig. 1 ersichtlich, in einem vorderen Verbindungsbereich 67, erkennbar in Fig. 1 durch Schraffur, und in einem hinteren Verbindungsbereich 69, erkennbar in einem Schraffurbereich des hinteren Dachabschnitts 7, mit dem ersten vorderen Dachteilabschnitt 21 bzw. dem hinteren Dachabschnitt 7 verbunden ist. Dazwischen, insbesondere im Bereich des zweiten mittleren Dachteilabschnitts 23 ist die Außenhaut lose von dem zweiten mittleren Dachteilabschnitt 23.

Vorteilhafterweise ist die Außenhaut 65 mit einem entsprechenden Zug über die Dachabschnitte bzw. Dachteilabschnitte gespannt, so daß eine Zugkraft von vorne auf den ersten vorderen Dachteilabschnitt 21 wirkt. Beim Lösen der Verschlußvorrichtung des Verdecks 3 von dem oberen Rand 19 der Windschutzscheibe wird durch den Zug in der Außenhaut 65 der erste vordere Dachteilabschnitt 21 mittels der Gelenkverbindungsstange 25 nach oben verschwenkt. Dies kann entweder von vornherein oder anschließend dadurch unterstützt werden, daß motorisch eine Kraft von vorne auf den ersten vorderen Dachteilabschnitt 21 aufgebracht wird, wodurch dieser in eine maximale Schwenkstellung nach oben verschwenkt wird.

Wie weiterhin aus Fig. 2 ersichtlich, wurde der hintere Dachabschnitt 7 um den Drehpunkt 50 nach hinten verschwenkt und gleichzeitig der zweite mittlere Dachteilabschnitt 23 nach unten mittels der Verbindungsstangen 29, 31 und 33 verschwenkt.

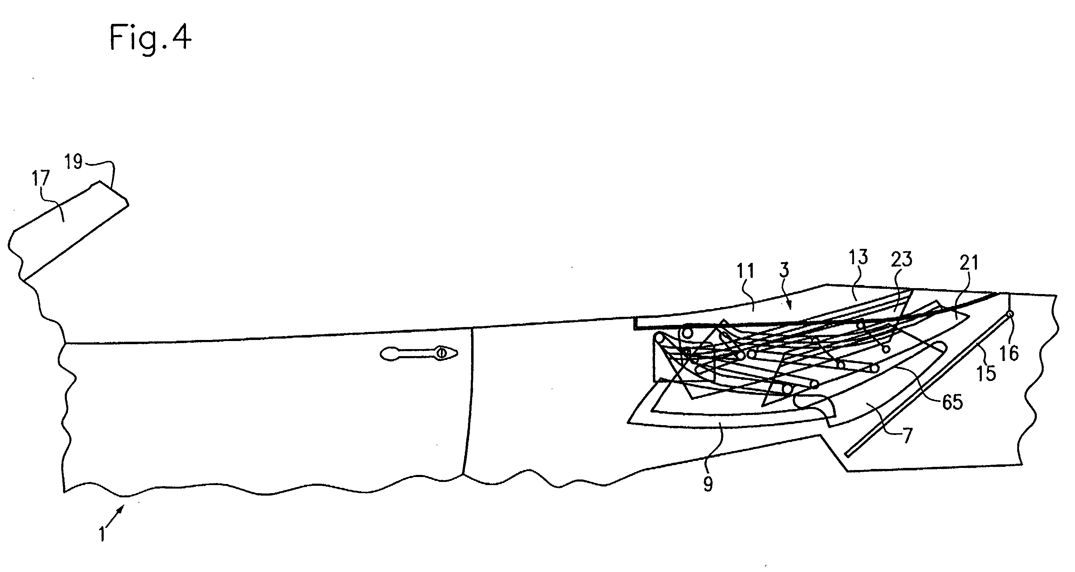

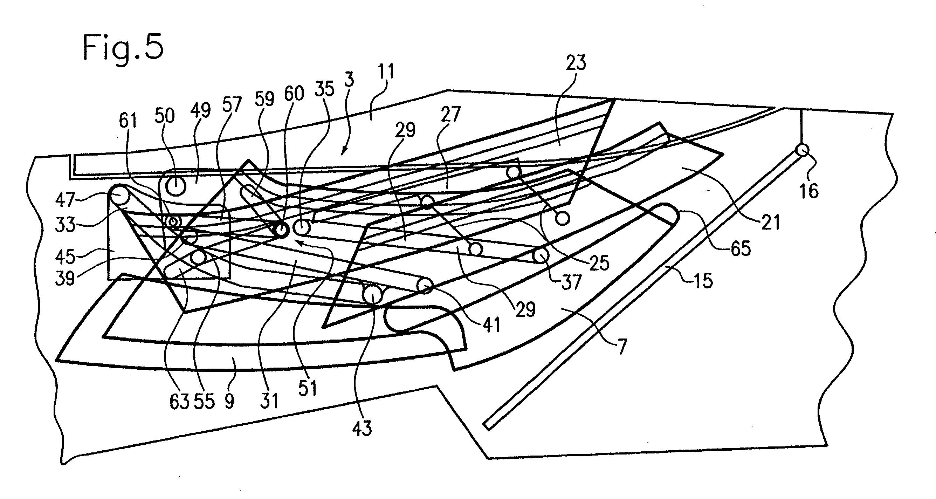

Beim weiteren Einschwenken des Kraftfahrzeugverdecks 3 wird der erste vordere Dachteilabschnitt 21 über den zweiten mittleren Dachteilabschnitt 23 gleitbeweglich und entlang von diesem verschoben und gelangt somit zwischen den zweiten mittleren Dachteilabschnitt 23 und den hinteren Dachteilabschnitt 7. Mittels der Verbindungsstangen 29, 31, 33 wird der zweite mittlere Dachteilabschnitt 23 zusammen mit dem ersten vorderen Dachteilabschnitt 21 gegenüber dem hinteren Dachabschnitt 7 verschwenkt und gelangt in eine Endstellung gemäß den Figuren 4 und 5.

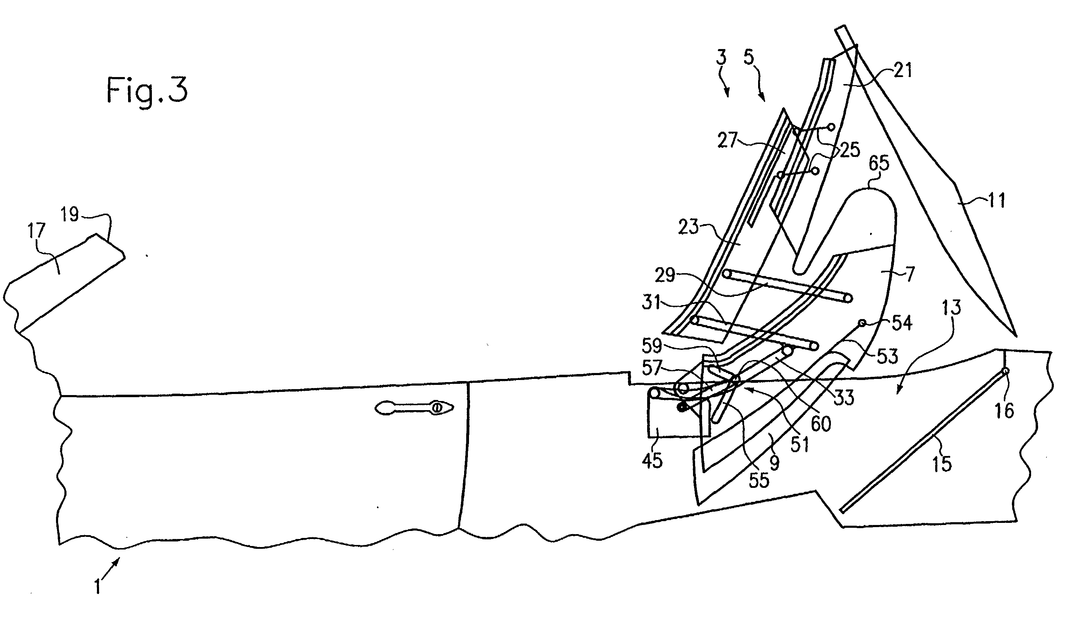

Wie aus Fig. 3 weiterhin ersichtlich, wird das Heckfenster 9 mittels des Gelenkmechanismus 51 und der Drehgelenkstange 53 in das Innere des hinteren Dachabschnitts 7 hineinbewegt, wodurch sich eine weitere Platzeinsparung des Kraftfahrzeugverdecks 3 in eingeklapptem Zustand ergibt.

In Fig. 5 ist das eingeklappte und versenkte Kraftfahrzeugverdeck 3 wie in Fig. 4 dargestellt, in vergrößertem Maßstab als Ausschnitt aus Fig. 4 dargestellt. Hieraus wird deutlich, wie vorteilhaft und platzsparend das Kraftfahrzeugverdeck 3 gemäß der vorliegenden Erfindung zusammenklappbar und -legbar ist.

## Patentansprüche

1. Versenkbares Kraftfahrzeugverdeck (3), insbesondere für wenigstens 4-sitzige Cabriolets, mit:
einem oberen, im wesentlichen starren Dachabschnitt (5), der einen oberen Dachbereich bildet, in Verbindung mit dem oberen Randbereich (19) der Windschutzscheibe (17) bringbar ist und einen ersten vorderen (21) und einen zweiten mittleren (23) Dachteilabschnitt aufweist,
einem hinteren, im wesentlichen starren Dachabschnitt (7), der sich an den oberen Dachabschnitt (5) anschließt und sich hinter dem Fahrgastraum des Kraftfahrzeugs (1) erstreckt,
einem Heckfenster (9), das an dem hinteren Dachabschnitt (7) angeordnet ist,
wobei der obere und der hintere Dachabschnitt (5, 7) in einen Aufnahmeraum (13) im Kraftfahrzeug (1) hinein und aus ihm heraus schwenkbar angeordnet sind, und
wobei beim Verschwenken des Verdecks (3) von einer ausgeklappten Dachstellung in eine versenkte Öffnungsstellung der zweite mittlere Dachteilabschnitt (23) in den hinteren Dachabschnitt (7) hineinbewegbar ist,
**dadurch gekennzeichnet, daß**
beim Verschwenken des Verdecks (3) von der ausgeklappten Dachstellung in die versenkte Öffnungsstellung gleichzeitig der erste vordere Dachteilabschnitt (21) über den zweiten mittleren und entlang von diesem Dachteilabschnitt (23) zwischen diesen und den hinteren Dachabschnitt (7) bewegbar ist.

2. Versenkbares Kraftfahrzeugverdeck nach Anspruch 1, **dadurch gekennzeichnet, daß** es eine flexible Außenhaut oder -schicht (65), insbesondere aus textilem Gewebe aufweist, und daß diese Außenhaut (65) sowohl mit dem hinteren Dachabschnitt (7) als auch mit dem ersten vorderen Dachteilabschnitt (21) flächig verbunden ist.

3. Versenkbares Kraftfahrzeugverdeck nach Anspruch 2, **dadurch gekennzeichnet, daß** in geschlossener Verdeckstellung eine Zugkraft von der Außenhaut (65) auf den ersten vorderen Dachabschnitt (21) ausgeübt wird.

4. Versenkbares Kraftfahrzeugverdeck nach einem der Ansprüche 1 bis 3, **dadurch gekennzeichnet, daß** zwei Gelenkverbindungsstangen (25) je Fahrzeuglängsseite vorgesehen sind, die gelenkig und in einer Gleitschiene (27) längsbeweglich gelagert und mit dem ersten vorderen Dachteilabschnitt (21) gelenkig verbunden sind und es dem ersten vorderen Dachteilabschnitt (21) ermöglichen, über den zweiten mittleren Dachteilabschnitt (23) zu schwenken und sich über diesen und entlang von diesem zu bewegen.

5. Versenkbares Kraftfahrzeugverdeck nach Anspruch 4, **dadurch gekennzeichnet, daß** zum Bewegen des Verdecks (3) eine Kraft von vorne auf den ersten vorderen Dachteilabschnitt (21) aufbringbar ist, wodurch dieser nach oben und anschließend über den zweiten mittleren Dachteilabschnitt (23) bewegbar ist.

6. Versenkbares Kraftfahrzeugverdeck nach Anspruch 5, **dadurch gekennzeichnet, daß** die Kraft mittels eines Motors aufbringbar ist.

7. Versenkbares Kraftfahrzeugverdeck nach einem der Ansprüche 1 bis 6, **dadurch gekennzeichnet, daß** je Fahrzeuglängsseite zwei Verbindungsstangen, eine obere Verbindungsstange (29) und eine untere Verbindungsstange (31), zwischen dem mittleren Dachteilabschnitt (23) und dem hinteren Dachteilabschnitt (7) vorgesehen sind, wobei die obere Verbindungsstange (31) bezüglich der unteren Verbindungsstange (31) oberhalb und zu dieser nach vorne versetzt angeordnet ist, und jede Verbindungsstange (29, 31) gelenkig an einem ihrer Enden (35, 39) mit dem zweiten mittleren Dachteilabschnitt (23) und an dem anderen Ende (37, 41) mit dem hinteren Dachabschnitt (7) verbunden ist.

8. Versenkbares Kraftfahrzeugverdeck nach Anspruch 7, **dadurch gekennzeichnet, daß** eine weitere Verbindungsstange (33) je Fahrzeuglängsseite vorgesehen ist, die einerseits gelenkig (47) an einem Lagerbock (45) des Fahrzeugs (1) und andererseits gelenkig (43) mit der oberen Verbindungsstange (31) verbunden ist.

9. Versenkbares Kraftfahrzeugverdeck nach einem der Ansprüche 1 bis 8, **dadurch gekennzeichnet, daß** das Heckfenster (9) starr ausgebildet ist, und, während der hintere Dachabschnitt (7) in seine Versenkstellung verschwenkt wird, das Heckfenster (9) in den hinteren Dachabschnitt (7) hineinbewegbar ist.

10. Kraftfahrzeug, insbesondere wenigstens 4-sitziges Cabriolet, **dadurch gekennzeichnet, daß** es ein versenkbares Kraftfahrzeugverdeck (3) nach einem der Ansprüche 1 bis 9 aufweist.

## Claims

1. Retractable top (3) of a motor vehicle, in particular for at least four-seat convertibles, comprising
an upper, substantially rigid roof section (5), which forms an upper roof section and can be connected to the upper edge portion (19) of the windscreen (17) and which comprises a first front roof partial roof section (21) and a second central partial roof section (23),
a rear, substantially rigid roof section (7) which adjoins the upper roof section (5) and which extends behind the passenger compartment of the motor vehicle (1),
a rear window (9) which is arranged at the rear roof section (7),
wherein the upper and the lower roof section (5, 7) are arranged in a manner pivotal into and out of an accommodation chamber (13) in the motor vehicle (1), and
wherein the second central partial roof section (23) moves into the rear roof section (7) when the top (3) is pivoted from an unfolded roof position into a hidden open position,
**characterised in that**
when pivoting the top (3) from an unfolded roof position into a hidden open position at the same time the first front partial roof section (21) moves over the second central partial roof section (23) and along this roof section between this roof section and the rear partial roof section (7).

2. Retractable top of a motor vehicle as claimed in claim 1, **characterised in that** it comprises a flexible outer skin or layer (65), in particular made of a textile tissue, and that this outer skin (65) is planarly connected to the rear roof section (7) and to the first front partial roof section (21).

3. Retractable top of a motor vehicle as claimed in claim 2, **characterised in that** in the closed position of the top, a tensile force is exerted by the outer skin (65) to the first front roof section (21).

4. Retractable top of a motor vehicle as claimed in one of claims 1 to 3, **characterised in that** two hinge joint rods (25) at each longitudinal side of the motor vehicle are provided which are pivotally supported in a slide rail (27) in a longitudinally movable manner and are pivotally connected to the first front partial roof section (21) and enable the first front partial roof section (21) to pivot over the second central partial roof section (23) and to move across same and along same.

5. Retractable top of a motor vehicle as claimed in claim 4, **characterised in that** a force is exerted from the front onto the first front partial roof section (21) for moving the top (3), which causes the front partial roof section to move upwardly and subsequently over the second central partial roof section (23).

6. Retractable top of a motor vehicle as claimed in claim 5, **characterised in that** said force can be generated by a motor.

7. Retractable top of a motor vehicle as claimed in one of claims 1 to 6, **characterised in that** two connection rods at each longitudinal side of the motor vehicle, an upper connection rod (29) and a lower connection rod (31), are provided between the central partial roof section (23) and the rear partial roof section (7), wherein the upper connection rod (29) with respect to the lower connection rod (31) is arranged above same and offset towards the front, and each connection rod (29, 31) is pivotally connected at one of its ends (35, 39) to the second central partial roof section (23) and at the other end (37, 41) to the rear roof section (7).

8. Retractable top of a motor vehicle as claimed in claim 7, **characterised in that** a further connection rod (33) at each longitudinal side of the motor vehicle is provided, which on the one hand is pivotally connected to a bearing pedestal (45) of the motor vehicle (1) and on the other hand pivotally (43) to the upper connection rod (31).

9. Retractable top of a motor vehicle as claimed in one of claims 1 to 8, **characterised in that** the rear window (9) is formed rigidly, and the rear window (9) can be moved into the rear roof section (7), when the rear roof section (7) is pivoted into its retracted position.

10. Motor vehicle, especially an at least four-seat convertible, **characterised in that** it comprises a retractable top (3) of a motor vehicle according to one of claims 1 to 9.

## Revendications

1. Capote escamotable pour véhicule automobile (3), en particulier pour cabriolets d'au moins 4 places, ayant
un segment de toit supérieur (5), essentiellement rigide, qui forme une zone de toit supérieure, peut être raccordé à la zone de bord supérieure (19) du pare-brise (17) et présente un premier segment partiel de toit avant (21) et un second central (23),
un segment de toit arrière (7), essentiellement rigide, qui se raccorde au segment de toit supérieur (5) et s'étend derrière l'habitacle du véhicule automobile (1),
une lunette arrière (9), qui est disposée sur le segment de toit arrière (7),
les segments de toit supérieur (5) et arrière (7) étant montés de manière à pouvoir être pivotés dans et hors d'un logement (13) situé dans le véhicule automobile (1), et
le second segment partiel de toit central (23) pouvant être déplacé vers l'intérieur dans le segment de toit arrière (7) lors du pivotement de la capote (3) d'une position de toit déployée dans une position d'ouverture escamotée,
**caractérisée en ce que**
lors du pivotement de la capote (3) de la position de toit déployée dans la position d'ouverture escamotée, le premier segment partiel de toit avant (21) peut être déplacé sur le second segment partiel de toit central (23) et en même temps le long de celui-ci entre celui-ci et le segment de toit arrière (7).

2. Capote escamotable pour véhicule automobile selon la revendication 1, **caractérisée en ce qu'**elle présente une peau ou couche extérieure (65) flexible, en particulier en tissu textile, et **en ce que** cette peau extérieure (65) est reliée de manière plane aussi bien au segment de toit arrière (7) qu'également au premier segment partiel de toit avant (21).

3. Capote escamotable pour véhicule automobile selon la revendication 2, **caractérisée en ce qu'**en position de capote fermée une force de traction est exercée par la peau extérieure (65) sur le premier segment de toit avant (21).

4. Capote escamotable pour véhicule automobile selon l'une des revendications 1 à 3, **caractérisée en ce que** deux tiges de liaison articulées (26) sont prévues pour chaque côté longitudinal de véhicule, lesquelles sont montées de manière articulée et mobile longitudinalement dans une glissière (27) et sont reliées de manière articulée au premier segment partiel de toit avant (21), et permettent au premier segment partiel de toit avant (21) de pivoter sur le second segment partiel de toit central (23) et de se déplacer sur celui-ci et le long de celui-ci.

5. Capote escamotable pour véhicule automobile selon la revendication 4, **caractérisée en ce que** pour déplacer la capote (3) on peut appliquer une force à partir de l'avant sur le premier segment partiel de toit avant (21), celui-ci pouvant être ainsi déplacé vers le haut et ensuite sur le second segment partiel de toit central (23).

6. Capote escamotable pour véhicule automobile selon la revendication 5, **caractérisée en ce que** la force peut être appliquée au moyen d'un moteur.

7. Capote escamotable pour véhicule automobile selon l'une des revendications 1 à 6, **caractérisée en ce que**, pour chaque côté longitudinal de véhicule, deux tiges de liaison, une tige de liaison supérieure (29) et une tige de liaison inférieure (31), sont prévues entre le segment partiel de toit central (23) et le segment partiel de toit arrière (7), la tige de liaison supérieure (29) étant disposée au-dessus de la tige de liaison inférieure (31) et de manière décalée vers l'avant par rapport à celle-ci, et chaque tige de liaison (29, 31) étant reliée de manière articulée par l'une de ses extrémités (35, 39) au second segment partiel de toit central (23) et par l'autre extrémité (37, 41) au segment de toit arrière (7).

8. Capote escamotable pour véhicule automobile selon la revendication 7, **caractérisée en ce qu'**une autre tige de liaison (33) est prévue pour chaque côté longitudinal de véhicule, laquelle est reliée d'un côté de manière articulée (47) sur un support (45) du véhicule (1) et de l'autre côté de manière articulée (43) à la tige de liaison supérieure (31).

9. Capote escamotable pour véhicule automobile selon l'une des revendications 1 à 8, **caractérisée en ce que** la lunette arrière (9) est réalisée de manière rigide, et, alors que le segment de toit arrière (7) est pivoté dans sa position escamotée, la lunette arrière (9) peut être déplacée vers l'intérieur dans le segment de toit arrière (7).

10. Véhicule automobile, en particulier cabriolet d'au moins 4 places, **caractérisé en ce qu'**il présente une capote escamotable pour véhicule automobile (3) selon l'une des revendications 1 à 9.
